# EUROPEAN PATENT APPLICATION

(11) **EP 4 472 000 A1**
(43) Date of publication of application: **04.12.2024**
(21) Application number: 23176410.1
(22) Date of filing: 31.05.2023
(51) Int. Cl.: H02B 13/045, H01H 33/56, G01M 3/20, F17C 13/04

(54) **ADAPTER AND GAS SUPPLY SYSTEM FOR A GAS-INSULATED SWITCHGEAR (GIS), GIS INCLUDING THE GAS SUPPLY SYSTEM AND METHOD OF SUPPLYING GAS TO THE GIS**

(71) Applicant: ABB Schweiz AG, 5400 Baden (CH)
(72) Inventor: KRAMER, Axel, 8057 Zürich (CH); HYRENBACH, Maik, 40878 Ratingen (DE); GRANHAUG, Ole, N-3727 Skien (NO)
(74) Representative: Zimmermann & Partner Patentanwälte mbB

(57) **Abstract**

Adapter (300) adapted to connect a gas source (100) to a gas-insulated switchgear (500), gas supply system (10) for a gas-insulated switchgear (500), and gas-insulated switchgear. The gas supply system (10) comprises: a gas source (100), an adapter (300), an inlet valve (200) connected to the gas source (100) and connectable to the adapter (300), and an outlet valve (400) connectable to the gas-insulated switchgear (500) and the adapter (300), wherein
the inlet valve (200) is adapted to open and/or close a first fluid connection (310) between the adapter (300) and the gas source (100),
the outlet valve (400) is adapted to open and/or close a second fluid connection (312) between the adapter (300) and the gas-insulated switchgear (500), and
the adapter (300) is configured to receive the inlet valve (200) and the outlet valve (400) so as to establish the first and second fluid connections (310, 312),
wherein
in a state where the inlet valve (200) is inserted into the adapter (300) to a penetration depth less than a first penetration depth (L1), the inlet valve (200) and the outlet valve (400) are adapted to close the first and second fluid connections (310, 312),
in a state where the inlet valve (200) is inserted into the adapter (300) to a penetration depth greater than a second penetration depth (L2), which is greater than the first penetration depth (L1), the inlet valve (200) and the outlet valve (400) are adapted to open the first and second fluid connections (310, 312), and
the first and second fluid connections (310, 312) are gas-tight with respect to the environment.

## Description

### TECHNICAL FIELD

Embodiments of the present disclosure relate to a gas supply system for a gas-insulated switchgear (GIS), to a GIS including the gas supply system, to an adapter that is adapted for a connection, particularly a gas-tight connection, of a gas source to the GIS, and to a method of supplying gas to the interior of the GIS.

### BACKGROUND

Gas-insulated switchgear (GIS) is an important component of electrical equipment used in high voltage applications, and a gas supply system is a key component of GIS as it provides a supply of insulating gas for proper operation or trace gas in the event of a leak in the GIS to locate the leak. However, in the case of trace gas supply, during the connection and disconnection phases of a gas source to the GIS, maintaining gas-tightness along the gas supply path can be a challenge. Interrupting the normal operation of the GIS to supply trace gas can result in significant downtime and potential losses.

To address these issues, current practices include the use of gas-tight fittings and valves, proper installation and maintenance procedures, and careful control of gas pressure and flow. Although these measures can help to maintain gas-tightness along the supply line, it remains a significant technological challenge to supply trace gas, particularly without interrupting ongoing operations.

The topic of gas-tightness is widely discussed in the industry. For example, CN111141462A focuses on the tank structure and its sealing design for improved gas-tightness. CN107748039A describes a bellows sealing structure that helps maintain gas-tightness during the operation of a circuit breaker, but does not provide specifics regarding the gas supply system. Both documents focus on the structural aspects of gas-tightness in GIS rather than on a gas supply system. The requirement for gas-tightness along the GIS gas supply path remains a challenging issue, for which hardly any convincing solutions exist.

### TERMS AND DEFINITIONS

This application uses terms whose meaning is briefly explained here.

In this document, "or" is understood as a non-exclusive disjunction. Accordingly, the link "A or B" expresses that at least one of the involved statements A, B is true. The punctuation mark "/" is understood as "or".

The term longitudinal refers to a direction in which an element has the greatest spatial extension and/or a symmetry axis. The term axial refers to a longitudinal axis of the element or unit. The term lateral refers to a direction substantially perpendicular to the longitudinal axis, in which the object has the second largest extension and/or which is parallel to a horizontal direction when mounted in a regular mounting orientation. An axial direction refers to a direction parallel to the longitudinal axis of the element.

The term "downstream" refers to a gas supply path between a gas source and a gas-insulated switchgear and indicates a direction towards the gas-insulated switchgear as seen from the gas source. Correspondingly, the term "upstream" indicates a direction away from the gas-insulated switchgear.

The term "fluid connection" is related to a mechanical connection that provides for the transfer of a fluid between two or more devices or systems. The term "fluid" is related to a substance that can flow and conform to the shape of its container, such as a gas or liquid. In embodiments, the fluid is a gas.

An open fluid connection between A and B is characterized by unobstructed flow through and along the connection, between A and B. A closed fluid connection is characterised by the flow between A and B being blocked.

Opening a fluid connection refers, unless otherwise specified in a specific case, to the closable opening of the fluid connection, i.e. to opening the fluid connection in closable manner. Closing a fluid connection refers, unless otherwise specified in a specific case, to the openable closing of the fluid connection, i.e. to closing the fluid connection in an openable manner.

The numbering of issues, such as side or fluid connection, as first issue or second issue, is related to the downstream direction. For example, a first side / connection refers to a position of first side / connection which is closer to the gas source than the position of a second side / connection.

Value ranges defined as x1 or x2 to y1 or y2 mean that the values are within intervals such as x1 to y1, or x1 to y2, or x2 to y1, or x2 to y2.

The terms "a" or "the", such as in the expression "a device" or "the device", are used to refer to at least one device. The quantity "a" or "the" includes the quantity "at least one". If the term "at least one" is used explicitly, a subsequent use of "a" or "the" does not imply any deviation from the aforementioned principle according to which "a" or "the" is to be understood as "at least one".

The terms "substantially" or "basically" as used herein typically imply that there may be a certain deviation, e.g. up to 1%, up to 3% or up to 10%, from the characteristic denoted with "substantially".

### SUMMARY

In view of the above, an adapter adapted to connect a gas source to a gas-insulated switchgear according to claim 1, a gas supply system for a gas-insulated switchgear according to claim 3, a gas-insulated switchgear according to claim 10 and a method of supplying a gas to the interior of a gas-insulated switchgear according to claim 11 are provided.

According to an aspect of the present disclosure, an adapter connecting or designed / adapted to connect a gas source to a gas-insulated switchgear (GIS) is provided. The adapter includes: an adapter channel, and at least one adapter seal that is arranged within the adapter channel.

The adapter is designed/adapted at a first side to receive an inlet valve of the gas source and at a second side to receive an outlet valve of the gas-insulated switchgear. In particular, the first side refers to an adapter end having a, especially axial, position, which is closer to the gas source than a, especially axial, position, of a second adapter end to which the second side refers. The "inlet" and "outlet" attributes are selected with respect to the gas flow from the gas source into the adapter and from the adapter out into the gas-insulated switchgear.

The seal of the adapter is designed / adapted to seal the adapter channel from the environment when the inlet valve is in contact with the adapter, and in particular to allow the inlet valve to move axially through the adapter channel without play. The inlet valve moves along a path which may start outside the adapter, a condition in which the gas source is separate from the adapter, and continue inside the adapter, a condition in which the gas source and adapter are brought together. The points where the path changes from "outside" to "inside" the adapter are given the attribute "in contact". In particular, the inlet valve is in contact with the adapter when the inlet valve is inserted into the adapter, especially into the adapter channel.

The adapter can be considered as an interface that connects or allows to connect the outlet valve to the inlet valve. In particular, the adapter can be considered as an interface that connects or allows connecting the gas source to the gas-insulated switchgear by means of the outlet valve and the inlet valve, particularly to allow gas to be supplied from the gas source to the gas-insulated switchgear.

According to another aspect of the present disclosure, a gas supply system for or of a gas-insulated switchgear (GIS) is provided. The gas supply system includes: a gas source, an adapter, an inlet valve connected to the gas source and connectable to the adapter, and an outlet valve connectable to the gas-insulated switchgear and the adapter. In particular, the outlet valve is attached to the gas-insulated switchgear in a releasable or non-releasable/fixed manner.

The inlet valve is adapted to open and/or close a fluid connection between the adapter and the gas source. This fluid connection is referred to as first fluid connection.

The outlet valve is adapted to open and/or close a fluid connection between the adapter and the gas-insulated switchgear. This fluid connection is referred to as second fluid connection.

The adapter is configured to receive the inlet valve at one side and the outlet valve at the other side to establish the first and second fluid connections. This means that when both the inlet valve and the outlet valve are inserted into the adapter, the first and second fluid connections can be established once the conditions for opening said fluid connections are met and the first and second fluid connections are opened.

In a state where the inlet valve is inserted into the adapter to a penetration depth less than a first penetration depth, especially where the inlet valve is not inserted into the adapter, the inlet valve and the outlet valve are adapted to close the first and second fluid connections.

In a state where the inlet valve is inserted into the adapter to a penetration depth greater than a second penetration depth, the inlet valve and the outlet valve are adapted to open the first and second fluid connections. That means, the conditions for opening the first and second fluid connections are met when the insertion depth of the inlet valve into the adapter exceeds the second penetration depth. In particular, the second penetration depth is greater than the first penetration depth.

When both the first and the second fluid connections are open, gas flows through the first fluid connection into the second fluid connection, providing a master fluid connection that includes the first and second fluid connections. The master fluid connection is established between the gas source and the gas-insulated switchgear, allowing gas to flow, particularly seamlessly, from the gas source into the gas-insulated switchgear.

When at least one of the first fluid connection and second fluid connection is closed, the master fluid connection is interrupted, so that gas is prevented from flowing from the gas source to the gas-insulated switchgear.

The first and second fluid connections are gas-tight to the environment, particularly regardless of the penetration depth of the inlet valve. Especially, the gas-tightness of the first fluid connection is ensured while the inlet valve is inserted in the adapter channel at a penetration depth larger than the first penetration depth, and/or the gas-tightness of the second fluid connection is ensured while the inlet valve is inserted in the adapter channel at a penetration depth larger than the second penetration depth.

According to another aspect of the present disclosure, a gas-insulated switchgear (GIS) is provided. The gas-insulated switchgear includes the gas supply system described above.

According to another aspect of the present disclosure, a method of supplying a gas to the interior of a gas-insulated switchgear (GIS) is provided. The method includes the following steps:
One step relates to providing the gas-insulated switchgear that includes: a gas source, an adapter, an inlet valve connected to the gas source and connectable to the adapter, and an outlet valve connected to the gas-insulated switchgear and the adapter.

One step relates to inserting the inlet valve into the adapter to a penetration depth less than a first penetration depth. This step ensures that the outlet valve and the inlet valve are closed so that a first fluid connection between the adapter and the gas source and a second fluid connection between the adapter and the gas-insulated switchgear are closed.

A further steps relates to guiding the inlet valve into the adapter to a penetration depth greater than a second penetration depth. In particular, the second penetration depth is greater than the first penetration depth. This step allows opening the outlet valve and the inlet valve. In particular, this step allows opening the outlet valve and keeping the inlet valve open. This, in turn, enables opening the second fluid connection and opening or keeping open the first fluid connections so as to open the master fluid connection and enable gas to be supplied from the gas source to the gas-insulated switchgear through the master fluid connection.

The first and second fluid connections are gas-tight to the environment. This effectively prevents any unintentional release of gas into the environment, whether the master connection is open or closed.

Some advantages relating to the adapter, the gas supply system, the gas-insulated switchgear and the method of supplying a gas to the interior of a gas-insulated switchgear are described in the following.

An advantage based on the fact that the components, i.e. adapter, inlet valve, outlet valve and/or gas-insulated switchgear and/or gas source are designed as separate components, in particular that the adapter and the inlet valve and/or the adapter and the outlet valve are physically separable from each other and can be brought together on demand, is that i) the components can be manufactured and maintained separately, thus reducing the respective efforts and costs, ii) the safety of each component is increased, in particular based on the fact that the components can be tested and maintained separately and in interaction with each other, thus increasing the overall system and operational safety, and iii) the complexity of the gas supply process to the gas-insulated switchgear is reduced, in particular based on the fact that starting and stopping the gas supply is achieved by simply joining and separating two components.

An advantage based on the fact that the components are each gas-tight to the environment and can be tested for gas-tightness both individually and in interaction with each other, is that improved gas-tightness is ensured, thus increasing operational safety and supply without interrupting operation.

An advantage based on the structure of the adapter and in particular on the support provided by the adapter seal to the inlet valve when it is axially guided in the adapter, in particular in the adapter channel, is the precise guidance of the components which are in contact and movable with respect to each other, in particular the inlet valve, when it is axially guided without play in the adapter. In addition, the adapter seal ensures a gas-tight flow from the inlet valve or gas source into the adapter and through the adapter to the outlet valve or gas-insulated switchgear and a safe and uninterrupted gas supply.

An advantage based on the individual gas-tightness of the components and of the system as a whole and/or on the design of the components which are separate or separable from each other, is that a gas-tight connection is ensured during the gas supply to the gas-insulated switchgear. In particular, this advantageous effect is provided during the establishment of a fluid connection between the gas source and the gas-insulated switchgear and/or during the process of disconnecting the gas source from the gas-insulated switchgear (or the adapter from the inlet valve or outlet valve). This allows the gas-insulated switchgear to be supplied during the normal operation of the gas-insulated switchgear without interrupting the normal operation. Such provision of smooth, uninterrupted operation allows for significant cost savings compared to known solutions where gas-insulated switchgear operation is interrupted while gas is being supplied to the gas-insulated switchgear.

Uninterrupted/continuous gas supply is particularly relevant when a gas leak is detected in or around the gas-insulated switchgear, particularly as a result of pressure measurements, so that tracer gas must be supplied to the gas-insulated switchgear to enable the leak to be located. During the localisation and/or sealing of the gas leak and/or the supply of tracer gas to the gas-insulated switchgear, the continuity of normal operation of the gas-insulated switchgear can be ensured.

Uninterrupted / continuous gas supply is also relevant when insulation gas is added to the gas-insulated switchgear. Such a supply may be required to compensate for gas loss after a leak has been detected, located and sealed.

An advantage based on the fact that the gas supply from the gas source to the gas-insulated switchgear is only carried out until the initially higher gas pressure in the gas source is equal to the gas pressure in the gas-insulated switchgear, i.e. until pressure equalisation is achieved between the gas source and the gas-insulated switchgear, is an automatic control / stop mechanism for the gas supply. Depending on the volumes of the gas source and the gas-insulated switchgear, the pressure difference between the gas source and the gas-insulated switchgear can be chosen / adjusted so that exactly the required / desired amount of gas is supplied to the gas-insulated switchgear. This has the advantage of eliminating the need for gas measurement, thus allowing to reduce the complexity of the supply equipment.

Further aspects, advantages and features of the present disclosure are apparent from the dependent claims, the description and the accompanying drawings.

### BRIEF DESCRIPTION OF THE DRAWINGS

So that the manner in which the above recited features of the present disclosure can be understood in detail, a more particular description of the present disclosure, briefly summarized above, may be had by reference to typical embodiments. The accompanying drawings relate to embodiments of the present disclosure and are described in the following:
Fig. 1 shows a symbol diagram of a gas-insulated switchgear (GIS) and a gas supply system according to embodiments described herein;
Fig. 2 shows, in a side view, the structure of the gas-insulated switchgear and the gas supply system according to embodiments described herein;
Figs. 3a-3c show, in side views, the structure of the gas-insulated switchgear and the gas supply system during the establishment of a fluid connection between the gas source and the gas-insulated switchgear, according to embodiments described herein; and
Figs. 4a, 4b show a symbol diagrams of the method of of supplying a gas to the interior of a gas-insulated switchgear, according to embodiments described herein.

### DETAILED DESCRIPTION OF EMBODIMENTS

Reference will now be made in detail to the various embodiments, one or more examples of which are illustrated in each figure. Any embodiment may be combined with any other embodiment, if technically reasonable and/or allowed. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described.

The reference numbers of the figures are used merely for illustration. The aspects of the invention are not limited to any particular embodiment. Instead, any aspect or embodiment described herein can be combined with any other aspect or embodiment described herein unless specified otherwise.

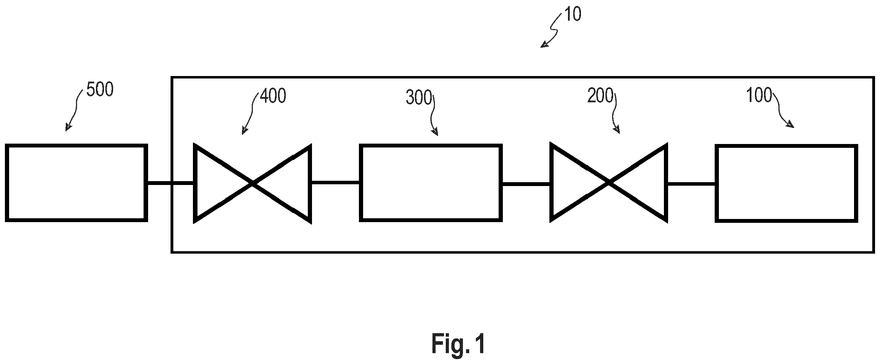

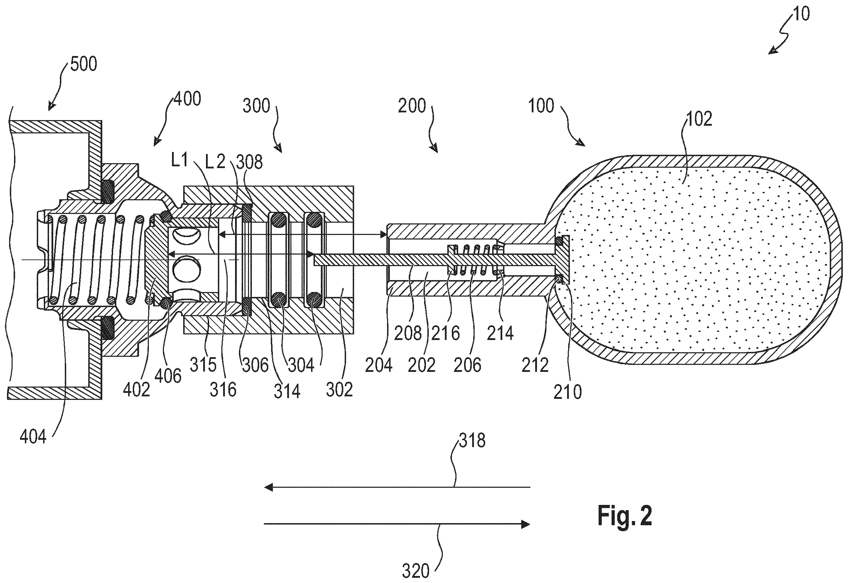

Fig. 1 shows a symbol diagram, and Fig. 2 shows, in a side view, the structure of a gas-insulated switchgear (GIS) and a gas supply system, according to embodiments of the present invention. Details explained with illustrative reference to Figs. 1, 2 shall not be understood as limited to the elements of Figs. 1, 2. Rather, those details may also be combined with further embodiments explained with illustrative reference to the other figures.

The state of insulation gas within a gas-insulated switchgear (GIS) is important in assessing the health of the electrical equipment and hence its functionality. Numerous effects can lead to undesired changes in the health status of the insulation gas and knowledge of these changes allows developing faults to be noticed early. A key fault is the loss of insulation gas in the compartment. This loss can be caused by e.g. one or several leaks to the outside. Once a loss of insulation gas is detected in the electrical equipment, it is in many cases desirable to locate the leak and fix it. In particular, for eco-efficient GIS using air as insulation gas it is desirable to have a solution for leak location at hand, which is able to quickly locate the leak at the site of the customer by service personnel.

Gas-insulated switchgears, once installed, are continuously monitored for pressure loss from the commissioning until end of life. This monitoring is based on manometers or pressure switches which may trigger an alarm as soon as the pressure falls below a minimum threshold pressure. In these cases, most likely a leak is present and a service intervention is needed.

Service personnel must be able to efficiently perform the following key procedures in the field:
- Verification of pressure measurement, indicating that the pressure is below a minimum threshold pressure,
- Location of positions where gas is leaking out using small, easy to use, handheld devices in a limited amount of time,
- Concept, schedule and actions for fixing the leak.

Known solutions allow identifying and locating leaks that are small, i.e., in the range of 10⁻⁵-10⁻⁴ mbar^{∗}dm³/s. For customer installed GIS which are filled with fluorinated gas as insulation gas (e.g., SF6 or fluorinated carbon molecules) the known solutions for leak location of such small leaks is the use of a hand-held gas detector (sniffer). These sniffers are used to detect trace amounts of these fluorinated molecules in the surrounding air.

For electrical equipment filled with air as insulation gas there is the problem of lacking specificity. It is possible to detect gas species other than air (e.g., SF6) in the gas matrix air, however, to detect air outgassing from the leak into the gas matrix air is not possible using the state-of-the-art concept for GIS leak location, described above. Tracer gas filled into the GIS would be a solution to the problem.

In applications with air contained in the pressurized compartment, it is state-of-the-art to locate leaks in pressurized compartments by filling tracer gas (e.g., He) from outside into the compartment. This enables the location of a leak from outside using a sniffer. The filling is typically done after the leak has been detected, by manual connection of a gas bottle containing the tracer gas with the gas valve of the switchgear.

Filling a tracer gas into an electrical equipment (e.g., GIS) installed in the field may be challenging. During connection of filling hoses to the gas valve of the GIS, errors can occur, leading to additional gas losses. Based on safety instructions, electrical equipment must be shut down when access to the gas valve is required. In the field of electrical equipment, a solution for filling of a tracer gas into a GIS compartment not requiring manual access to the gas valve is not reported and does not exist to the best knowledge of the authors. In order to execute leak search and leak location in case of a pressure drop, this problem causes a lot of additional effort, since shutdown and outage time of the entire system is required.

Known solutions use a gas cylinder with a filling hose which has a valve of the filling hose, and during filling the filling hose is pushed into a valve of the GIS. The problems related to these solutions are: a) if the filling hose is not properly fitted for filling, gas may escape unintentionally and in an uncontrolled manner; b) it is not clearly determined which valve opens first: the valve of the filling hose or valve of the GIS. During operation of the GIS, escaped gas can be a potential hazard.

The solution to the problem can be based on a special connection interface which is suitable to guarantee safe filling of tracer gas avoiding the risk of gas loss from the pressurized compartment of the electrical equipment. The solution may involve the fixation of a gas source 100 such as a gas bottle to the connection interface and subsequent release of gas 102 into the pressurized compartment of the GIS 500. The bottle 100 may be removable and more new bottles can be attached after the gas from the first bottle has been used.

Alternatively, a factory-mounted gas bottle may be attached to the GIS compartment, from which tracer gas can be released into the GIS compartment in a controlled way.

It may be important to fill gas, especially tracer gas into the GIS compartment in a safe, easy and reliable way. There is the risk of failure when filling hoses are attached to the gas valve of the GIS. Our solution is safe, envisaging a special connection interface sitting on the GIS compartment for mounting a gas bottle or, alternatively, envisaging a factory-mounted gas bottle sitting on the GIS compartment.

One embodiment of a method for gas supply, especially of tracer gas supply, to the gas-insulated switchgear 500, may include:
- storing tracer gas in a vessel (100) with pressure larger than the pressure in the gas-insulated switchgear 500,
- mounting the tracer gas vessel to a connection interface / adapter 300
- providing means such as adjustable valves 200, 400 to release tracer gas from the gas vessel 100 into the GIS 500.

The means to release the tracer gas from the vessel into the pressurized compartment of the gas-insulated switchgear 500 can be e.g. a valve or a breaking membrane which is punched when screwing in the vessel like in "soda maker" bottles (turning of the gas bottle will break the membrane and the gas will be released into the GIS). When removing the bottle, self-closing valves 200, 400 may prevent leaking of gas.

According to embodiments described herein, an adapter 300 connecting or designed / adapted to connect a gas source 100 to a gas-insulated switchgear (GIS) 500 may include: an adapter channel 302, and at least one seal 304, 306 that is arranged within the adapter channel 302.

The adapter 300 may be designed/adapted at a first side to receive an inlet valve 200 of the gas source 100 and at a second side to receive an outlet valve 400 fluid-connected to the gas-insulated switchgear. In particular, the first side may refer to an adapter end having an axial position which is closer to the gas source 100 than an axial position of a second adapter end to which the second side refers. The "inlet" and "outlet" attributes are selected with respect to the gas flow from the gas source 100 into the adapter 200 and from the adapter 300 out into the gas-insulated switchgear 500.

According to embodiments described herein, the adapter 300 may be shaped elongated, particularly tubular shaped, along an axis 316 of the adapter 300. The adapter 300 can have a circular cross-section. However, the adapter 300 can also have another cross-sectional shape, e.g. a rectangular, square or oval cross-section. A circular cross-section is advantageous over other cross-sectional shapes in that it allows for adjustment/pairing of the inlet valve 200 and the adapter channel 302 independently of the azimuth position of the involved components, thus facilitating the insertion of the inlet valve 200 into the adapter channel 302. However, in all cases, the adapter 300 is cylindrically formed in the longitudinal direction, independently of the cross section chosen.

The seal 304, 306 of the adapter 300 may be designed / adapted to seal the adapter channel 302 from the environment when the inlet valve 200 is in contact with the adapter 300, and in particular to allow the inlet valve 200 to move axially through the adapter channel 302 without play / slack. The inlet valve 200 is adapted to move along a path which may start outside the adapter 300, a condition in which the gas source 100 is physically and functionally separate from the adapter 300, and to continue inside the adapter 300, a condition in which the gas source 100 and adapter 300 are brought together. The points where the path changes from "outside" to "inside" the adapter 300 are given the attribute "in contact". In particular, the inlet valve 200 is in contact with the adapter 300 when the inlet valve 200 is inserted into the adapter 300, especially into the adapter channel 302.

The adapter 300 can be considered as an interface that connects or allows to connect the outlet valve 400 to the inlet valve 200. In particular, the adapter 300 can be considered as an interface that connects or allows connecting the gas source 100 to the gas-insulated switchgear 500 by means of the outlet valve 400 and the inlet valve 200, particularly to allow gas to be supplied from the gas source 100 to the gas-insulated switchgear 500.

The inlet valve 200 enables transfer of gas (102) to the GIS (500) and allows for a fast establishment / dismantling of the gas supply path. The inlet valve 200 can be fluid-connected to the adapter channel 302 by inserting the inlet valve 200 into the adapter channel 302, which is a precondition for establishing the fluid connection between the inlet valve 200 and the adapter channel 302.

According to embodiments described herein, the seal of the adapter 300 may comprise at least one adapter channel seal 304, particularly two adapter channel seals 304, and/or an adapter seal 306.

According to embodiments described herein, the adapter channel seal 304 and the adapter seal 306 may be each substantially formed as an O-ring, and particularly surround an inner wall of the adapter channel 302. In particular, the adapter channel seal 304 may be adapted to provide a gas-tight seal against the environment and/or to provide a first fluid connection 310 between the adapter 300 and the gas source 100 in a gas tight-manner. In particular, the adapter channel seal 304 may be formed in a plane that is lateral to the axial direction 316.

According to embodiments described herein, the adapter channel seal 304 may be adapted to allow the inlet valve 200 to move, particularly axially, without lateral slack or play, inside the adapter channel 302.

According to embodiments described herein, the adapter seal 306 may be adapted to provide a gas-tight seal against the environment and/or to provide a second fluid connection 312 between the adapter 300 and the gas-insulated switchgear 500 in a gas-tight manner.

An advantage related to the structure of the adapter 300 and in particular to the support provided by the adapter channel seal 304 to the inlet valve 200 when it is axially guided in the adapter 300, in particular in the adapter channel 302, is the precise guidance of the components 204, 302 which are in contact and movable with respect to each other, in particular the inlet valve 200, especially the inlet wall 204, when it is axially guided without play in the adapter 300, especially in the adapter channel 302. In addition, the adapter channel seal 304 ensures a gas-tight flow from the inlet valve 200 or gas source 100 into the adapter 300 and through the adapter 300 to the outlet valve 400 or gas-insulated switchgear 500 and a safe and uninterrupted gas supply.

The adapter channel 302 may have a first diameter in an upstream section 314 of the adapter 300, and a second diameter of the adapter channel 302 in a downstream section 315 of the adapter 300. The first diameter may be different from the second diameter. In particular, the first diameter is larger than the second diameter.

The course of the adapter channel 302 from the inlet side to the outlet side may be cylindrical in sections 314, 315, particularly with a constant diameter in sections 314, 315. Consequently, the adapter channel can have a step-like transition from the first section 314 with the first diameter to the second section 315 with the second diameter. An adapter step 308 is formed at the transition. The lengths of the first and second sections 314, 315 of the adapter channel 302 may be substantially equal; particularly the length of the first section 314 is greater than that of the second section 315, for example by 5% to 30%.

The adapter seal 306 may be arranged at the step 308 between the first and second regions 314, 315 of the channel 302. The technical effect of the adapter seal 306 is, on the one hand, a gas-sealing function between the channel 302 and the valve 400 and, on the other hand, a shock-absorbing function between the outlet valve 400 and the adapter step 308 when the outlet valve 400 is guided axially through the second region 315 of the adapter channel 302.

According to embodiments described herein, the seal 304, 306 of the adapter 300 may be designed / adapted to seal the adapter channel 302 from the environment when the inlet valve 200 is in contact with the adapter 300, and in particular to allow the inlet valve 300 to move axially through the adapter channel 302 without play. The inlet valve 300 may move along a path which may start outside the adapter 300, a condition in which the gas source 100 is separate from the adapter 300, and continue inside the adapter 300, a condition in which the gas source 100 and adapter 300 are brought together.

According to embodiments described herein, the adapter 300 can be considered as an interface that connects or allows to connect the outlet valve 400 to the inlet valve 200. In particular, the adapter 300 can be considered as an interface that connects or allows connecting the gas source 100 to the gas-insulated switchgear 500 by means of the outlet valve 400 and the inlet valve 200, particularly to allow gas to be supplied from the gas source 100 to the gas-insulated switchgear 500.

According to embodiments described herein, a gas supply system 10 for a gas-insulated switchgear 500 may comprise: a gas source 100, an adapter 300, an inlet valve 200 connected to the gas source 100 and connectable to the adapter 300, and an outlet valve 400 connectable to the gas-insulated switchgear 500 and the adapter 300. In particular, the outlet valve 400 may be attached to the gas-insulated switchgear 500, releasably or non-releasably, for example by means of a screw fastener or a welded connection.

The inlet valve 200 may be adapted to open and/or close a first fluid connection 310 between the adapter 300 and the gas source 100.

The outlet valve 400 may be adapted to open and/or close a second fluid connection 312 between the adapter 300 and the gas-insulated switchgear 500.

The adapter 300 may be configured to receive the inlet valve 200 at one side and the outlet valve 300 at the other side to establish the first and second fluid connections 310, 312. This means that when both the inlet valve 200 and the outlet valve 400 are inserted into the adapter 300, the first and second fluid connections 310, 312 can be established once the conditions for opening said fluid connections are met and the first and second fluid connections 310, 312 are opened.

The adapter 300 can either be screwed onto the outlet valve 400 at the start of the gas supply, or it can be permanently, particularly removably, mounted on the outlet valve 400.

In a state where the inlet valve 200 is inserted into the adapter 300 to a penetration depth less than a first penetration depth L1, the inlet valve 200 and the outlet valve 400 may be adapted to close the first and second fluid connections 310, 312.

In a state where the inlet valve 200 is inserted into the adapter 300 to a penetration depth greater than a second penetration depth L2, which is greater than the first penetration depth L1, the inlet valve 200 and the outlet valve 400 may be adapted to open the first and second fluid connections 310, 312. That means, the conditions for opening the first and second fluid connections 310, 312 are met when the insertion depth of the inlet valve 200 into the adapter 300 exceeds the second penetration depth L2. In particular, the second penetration depth L2 is greater than the first penetration depth L1.

When both the first and the second fluid connections 310, 312 are open, gas flows through the first fluid connection 310 into the second fluid connection 312, providing a master fluid connection that includes the first and second fluid connections 310, 312. The master fluid connection 310, 312 is established between the gas source and 100 the gas-insulated switchgear 500, allowing gas 102 to flow, particularly seamlessly, from the gas source 100 into the gas-insulated switchgear 500.

When at least one of the first fluid connection 310 and second fluid connection 312 is closed, the master fluid connection 310, 312 is interrupted, so that gas 102 is prevented from flowing from the gas source 100 to the gas-insulated switchgear 500.

The first and second fluid connections 310, 312 may be gas-tight with respect to the environment, particularly regardless of the penetration depth of the inlet valve 200. Especially, the gas-tightness of the first fluid connection 310 is ensured while the inlet valve 200 is inserted in the adapter channel 302 at a penetration depth larger than the first penetration depth L1, and/or the gas-tightness of the second fluid connection 302 is ensured while the inlet valve 200 is inserted in the adapter channel 302 at a penetration depth larger than the second penetration depth L2.

An advantage related to the fact that the components, i.e. adapter 300, inlet valve 200, outlet valve 400 and/or gas-insulated switchgear 500 and/or gas source 100 are designed as separate components, in particular that the adapter 300 and the inlet valve 200 on one hand and/or the adapter 300 and the outlet valve 400 on the other hand are physically separable from each other and can be brought together on demand, is that i) the components 100, 200, 300, 400, 500 can be manufactured and maintained separately, thus reducing the respective efforts and costs, ii) the safety of each component is increased, thus increasing the overall system and operational safety, and iii) the complexity of the gas supply process to the gas-insulated switchgear 500 is reduced.

An advantage related to the fact that the components 100, 200, 300, 400, 500 are each gas-tight to the environment and can be tested for gas-tightness both individually and in interaction with each other, is that improved gas-tightness is ensured, thus increasing operational safety and supply without interrupting operation.

According to embodiments described herein, in a state of the inlet valve 200 inserted in the adapter 300 with a penetration depth greater than the first penetration depth L1 and equal to or less than the second penetration depth L2, the outlet valve 400 may be adapted to close the second fluid connection 312, and the inlet valve 200 is adapted to open the first fluid connection 310. Thus, the fact that the inlet valve 200 is first opened at a penetration depth between L1 and L2 and then, at a penetration depth > L2, the outlet valve 400 is opened, ensures an efficient and safe two-stage sealing of the gas supply to the outside, in particular of the components conducting the gas 102 through, e.g. inlet wall 204, adapter channel 302, and inner wall of the outlet valve 400.

According to embodiments described herein, in a state of the inlet valve 200 not inserted in the adapter 300, the outlet valve 400 and the inlet valve 200 may be each closed, allowing the gas-insulated switchgear 500 and the gas source 100 to be each sealed off from the environment.

According to embodiments described herein, the inlet valve 200 may be adapted to open and/or to close the first fluid connection 310 as a function of the penetration depth of the inlet valve 200 in the adapter 300.

According to embodiments described herein, the inlet valve 200 may be adapted to i) open the first fluid connection 310, in a state of the inlet valve 200 inserted in the adapter 300 with a penetration depth greater than the first penetration depth L1, and/or ii) close the first fluid connection 310, in a state of the inlet valve 200 inserted in the adapter 300 with a penetration depth less than the first penetration depth L 1 or in a in a state of the inlet valve 200 not inserted in the adapter 300.

According to embodiments described herein, the inlet valve 200 may comprise an axially extending inlet channel 202 radially bounded by an inlet wall 204, and/or an elastic element such as an inlet spring 206, and/or an inlet pin 208, and/or a first spring locker 214 fixed to the inlet wall 204 and/or a second spring locker 216 fixed to the inlet pin 208.

According to embodiments described herein, the elastic element of the inlet valve 200 i) may abut at an upstream end against the first spring locker 214, and/or ii) may abut at a downstream end against the second spring locker 216, and/or iii) may be preloaded so as to elastically retain the inlet pin 208 in an initial position in which a downstream end of the pin extends beyond a downstream end of the inlet channel 202 by a length greater than zero.

According to embodiments described herein, the inlet pin 208 may have an inlet disk 210 at an upstream end.

According to embodiments described herein, upon insertion of the inlet valve 200 in the adapter 300 with a penetration depth greater than the first penetration depth L1, the inlet valve 200 may be adapted to allow the inlet pin 208 and the inlet disk 210 to be displaced relative to the inlet channel 202 in the upstream direction 320 to allow gas to enter the inlet channel 202 around the inlet disk 210.

According to embodiments described herein, the inlet valve 200 may be adapted i) to keep the inlet channel 202 closed in the initial position of the inlet pin 208 when the inlet disk 210 abuts against an upstream end of the inlet channel 202 and thus particularly to close the inlet channel 202 and the fluid connection through the inlet channel 202 and/or the inlet valve 200, and/or ii) to open the inlet channel 202 when the inlet pin 208 is moved from the initial position of the inlet pin 208 such that the inlet disk 210 no longer abuts against the upstream end of the inlet channel 202 and thus particularly to open the inlet channel 202 and the fluid connection through the inlet channel 202 and/or the inlet valve 200.

According to embodiments described herein, the adapter seal 306 may be formed in a plane that is substantially lateral to the axial direction 316 and/or spaced from a downstream adapter end by a length of at least the second penetration depth L2 minus the first penetration depth L1.

According to embodiments described herein, the outlet valve 400 may be adapted to open and/or to close the second fluid connection 312 as a function of the penetration depth of the inlet valve 200 in the adapter 300.

According to embodiments described herein, the outlet valve 400 may be adapted i) to open the second fluid connection 312 in a state of the inlet valve 200 inserted in the adapter 300 with a penetration depth greater than the second penetration depth L2, and/or ii otherwise to close the second fluid connection 312.

According to embodiments described herein, the outlet valve 400 may be adapted to provide a gas-tight seal of the adapter 300 and/or the gas-insulated switchgear 500 against the environment, in particular by the outlet valve 400 abutting against the adapter seal 306.

According to embodiments described herein, the outlet valve 400 may comprise an outlet disk 402, and/or an outlet spring 404, and/or an outlet seal 406.

According to embodiments described herein, the outlet seal 406 may be substantially formed as an O-ring, and particularly surround an inner wall of the outlet valve 400.

According to embodiments described herein, the outlet seal 406 may be adapted to provide the fluid connection between the adapter 300 and the outlet valve 400 in a gas tight-manner and/or to provide a gas-tight seal against the environment.

According to embodiments described herein, the outlet spring 404 may be i) fixed at a downstream end to the inner wall of the outlet valve 400 and/or ii) fixed at an upstream end to the outlet disk 402, and/or iii) preloaded, especially partially compressed, so as to elastically retain the outlet disk 402 in an initial position in which the outlet disk 402 abuts against the outlet seal 406, thus particularly providing a gas seal against the adapter 300.

According to embodiments described herein, in a state of the inlet valve 200 inserted in the adapter 300 with a penetration depth greater than the second penetration depth L2, the outlet disk 402 may be adapted to be moved downstream by a downstream end of the inlet valve 200 and to further compress the outlet spring 404, particularly to open the outlet valve 400 and in particular to allow gas to flow from the adapter 300 into the gas-insulated switchgear 500.

According to embodiments described herein, a gas-insulated switchgear 500 may comprise a gas supply system 10 as described above.

An advantage based on the individual gas-tightness of the components and of the system as a whole and/or on the design of the components which are separate or separable from each other, is that a gas-tight connection is ensured during the gas supply to the gas-insulated switchgear 500. In particular, this advantageous effect is provided during the establishment of a first fluid connection 310 between the gas source 100 and the gas-insulated switchgear 500 and/or during the process of disconnecting the gas source 100 from the gas-insulated switchgear 500 (or the adapter 300 from the inlet valve 200 or outlet valve 400). This allows the gas-insulated switchgear 500 to be supplied during the normal operation of the gas-insulated switchgear 500 without interrupting the normal operation. Such provision of smooth, uninterrupted operation allows for significant cost savings compared to known solutions where gas-insulated switchgear operation is interrupted while gas is being supplied to the gas-insulated switchgear.

Uninterrupted/continuous gas supply is particularly relevant when a gas leak is detected in or around the gas-insulated switchgear 500, particularly as a result of pressure measurements, so that tracer gas must be fed into the gas-insulated switchgear 500 to enable the leak to be located. During locating and/or sealing the gas leak, and/or tracer gas feeding to the gas-insulated switchgear 500, continuity of normal operation of the gas-insulated switchgear can be ensured.

Uninterrupted / continuous gas supply is also relevant when insulation gas is added to the gas-insulated switchgear 500. Such a supply may be required to compensate for gas loss after a leak has been detected and sealed.

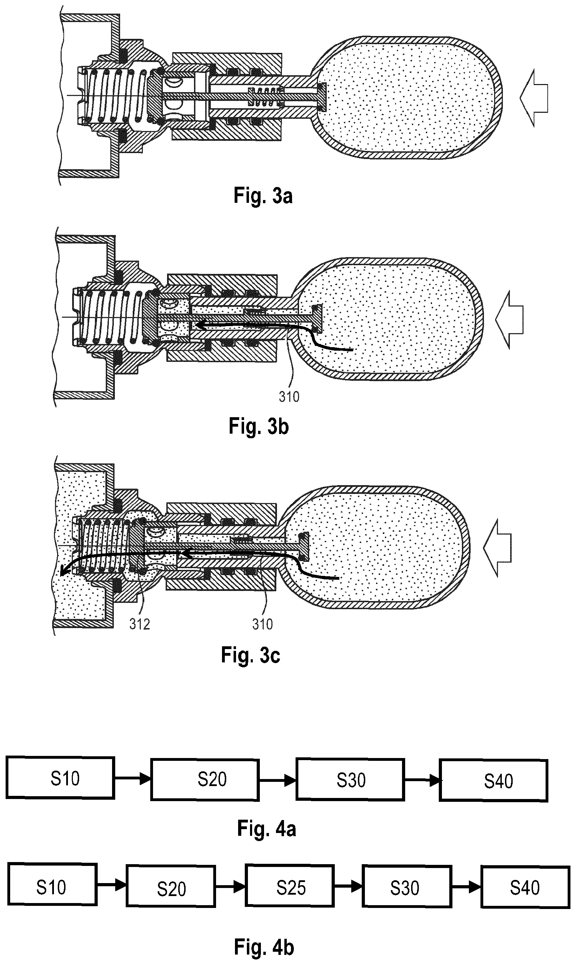

Figs. 3a-3c show, in side views, the structure of the gas-insulated switchgear and the gas supply system during the establishment of a fluid connection between the gas source and the gas-insulated switchgear, and Figs. 4a, 4b show symbol diagrams of the method of of supplying a gas to the interior of a gas-insulated switchgear, according to embodiments of the present invention. Details explained with illustrative reference to Figs. 3a-3c and 4a, 4b shall not be understood as limited to the elements of Figs. 3a-3c and 4a, 4b. Rather, those details may also be combined with further embodiments explained with illustrative reference to the other figures.

According to embodiments described herein, a method of supplying a gas 102 to the interior of a gas-insulated switchgear 500 is provided. The method is shown in Fig. 4a and may comprise the following steps:
One step S10 relates to providing the gas-insulated switchgear 500, that may comprise: a gas source 100, an adapter 300, an inlet valve 200 connected to the gas source 100 and connectable to the adapter 300, and an outlet valve 400 connected to the gas-insulated switchgear and the adapter 300. This step may include a sub-step of providing the gas source 100, the adapter 300, the inlet valve 200, and an outlet valve 400, a further sub-step of connecting the gas source 100 to the adapter 300 in a detachable manner, and a further sub-step of connecting the outlet valve 400 on one side to the gas-insulated switchgear 500 in a detachable or particularly in a fixed manner, and on the other side to the adapter 300 in a detachable manner.

A further step S20 relates to inserting the inlet valve 200 into the adapter 300 to a penetration depth less than a first penetration depth L1. This step, which is shown in Fig. 3a, may ensure that the outlet valve 400 and the inlet valve 200 are closed so that a first fluid connection 310 between the adapter 300 and the gas source 100 and a second fluid connection 312 between the adapter 300 and the gas-insulated switchgear 500 are closed.

A further step S30 relates to guiding the inlet valve 200 into the adapter 300 to a penetration depth greater than a second penetration depth L2. In particular, the second penetration depth L2 is greater than the first penetration depth L1. This step, which is shown in Fig. 3c, may allow opening the outlet valve 400 and keeping the inlet valve 200 open. This, in turn, enables opening the second fluid connection 312 and opening or keeping open the first fluid connections 310 so as to open the master fluid connection 310, 312 and enable gas 102 to be supplied from the gas source 100 to the gas-insulated switchgear 500 through the master fluid connection 310, 312.

A further step S40 relates to ensuring that the first and second fluid connections 310, 312 are gas-tight to the environment. This effectively prevents any unintentional release of gas into the environment, whether the master connection is open or closed.

According to embodiments described herein, a further step S25, which is shown in Fig. 3b and is part of Fig. 4b, relates to inserting the inlet valve 200 into the adapter 300 at a penetration depth greater than the first penetration depth L1 and equal to or less than the second penetration depth L2, may cause the outlet valve 400 to remain closed, thereby keeping the second fluid connection 312 closed, and/or the inlet valve 200 to open, thereby opening the first fluid connection 310.

Steps S25 and S30, wherein the inlet valve 200 is opened in step S25 and then the outlet valve 400 in step S30, ensure efficient and safe two-stage sealing of the gas supply, in particular of the components conducting the gas 102 through, e.g. inlet wall 204, adapter channel 302, and inner wall of the outlet valve 400, to the outside.

When removing the inlet valve 200 from the adapter 300, the outlet valve 400 is closed in a first stage, and the outlet valve 400 is closed in a second stage. When the inlet valve 200 is completely removed from the adapter 300, the valves 200, 400 are both closed so that no gas can flow out of either the gas-insulated switchgear 500 or the gas source 100.

The secure sealing of the two-stage start of gas filling is ensured in an analogous manner for the two-stage end of gas filling.

According to embodiments described herein, not inserting the inlet valve 200 into the adapter 300 may cause both the outlet valve 400 and the inlet valve 200 to remain closed, thus sealing off the gas-insulated switchgear 500 and the gas source 100 from the environment.

According to embodiments described herein, withdrawing the inlet valve 200 from the adapter 300 from a penetration depth greater than the second penetration depth L2 to a penetration depth equal to or less than the second penetration depth L2 and greater than the first penetration depth L1 may cause i) the outlet valve 400 to close, thereby closing the second fluid connection 312, and ii) the inlet valve 200 to remain open, thereby keeping the first fluid connection 310 open.

According to embodiments described herein, withdrawing the inlet valve 200 from the adapter 300 from a penetration depth equal to or less than the second penetration depth L2 and greater than the first penetration depth L1 to a penetration depth less than the first penetration depth L1, or removing the inlet valve 200 from the adapter 300, may cause i) the outlet valve 400 to remain closed, thereby keeping the second fluid connection 312 closed, and ii) the inlet valve 200 to close, thereby closing the first fluid connection 310.

According to embodiments described herein, controlling a gas flow from the gas source 100 to the interior of the gas-insulated switchgear may be performed as a function of a pressure difference between gas source 100 and gas-insulated switchgear 500, particularly wherein specifying the quantity of gas to be filled into the gas-insulated switchgear may be done by specifying an initial pressure difference, especially wherein the gas flow is allowed if the pressure difference is greater than zero, otherwise it may be stopped.

An advantage based on the fact that the gas supply from the gas source 100 to the gas-insulated switchgear 500 is only carried out until the initially higher gas pressure in the gas source 100 is equal to the gas pressure in the gas-insulated switchgear 500, i.e. until pressure equalisation is achieved between the gas source 100 and the gas-insulated switchgear 500, is an automatic control / stop mechanism for the gas supply. Depending on the volumes of the gas source 100 and the gas-insulated switchgear 500, the pressure difference between the gas source 100 and the gas-insulated switchgear 500 can be chosen / adjusted so that exactly the required / desired amount of gas is supplied to the gas-insulated switchgear 500. This has the advantage of eliminating the need for gas measurement, thus allowing to reduce the complexity of the supply equipment.

An initial gas supply e.g. with insulating gas may be controlled by a control system and performed by a centralized gas supply 100. The gas supply may automatically stop when pressure equalisation is achieved between the gas source 100 and the gas-insulated switchgear 500.

This written description uses examples to disclose the disclosure, including the best mode, and also to enable any person skilled in the art to practice the described subject-matter, including making and using any apparatus or system. Embodiments described herein provide a concept for a safe gas supply to a gas-insulated switchgear in a gas-tight manner, that can be provided without interrupting the normal operation of the gas-insulated switchgear. While various specific embodiments have been disclosed in the foregoing, mutually non-exclusive features of the embodiments described above may be combined with each other. The patentable scope is defined by the claims, and other examples are intended to be within the scope of the claims if they have structural elements that do not differ from the literal language of the claims, or if they include equivalent structural elements with insubstantial differences from the literal language of the claims.

### REFERENCE SIGNS

- 10: gas supply system
- 100: gas source, gas bottle
- 102: gas
- 200: inlet valve
- 202: inlet channel
- 204: inlet wall
- 206: inlet spring
- 208: inlet pin
- 210: inlet disk
- 212: inlet seal
- 214: first spring locker
- 216: second spring locker
- 300: adapter
- 302: adapter channel
- 304: adapter channel seal
- 306: adapter seal
- 308: adapter step
- 310: first fluid connection
- 312: second fluid connections
- 314: first adapter section, first section of adapter channel 302
- 315: second adapter section, second section of adapter channel 302
- 316: adapter axis, axial direction of the adapter
- 318: downstream direction
- 320: upstream direction
- L1: first penetration depth
- L2: second penetration depth
- 400: outlet valve
- 402: outlet disk
- 404: outlet spring
- 406: outlet seal
- 500: gas-insulated switchgear

## Claims

1. Adapter (300) adapted to connect a gas source (100) to a gas-insulated switchgear (500), the adapter (300) comprising:
- an adapter channel (302) adapted at a first side to receive an inlet valve (200) of the gas source (100) and at a second side adapted to receive an outlet valve (400) of the gas-insulated switchgear (500), and
- at least one seal (304, 306) that is arranged within the adapter channel (302),
wherein the seal (304, 306) is adapted to seal the adapter channel (302) from the environment when the inlet valve (200) is in contact with the adapter (300).

2. The adapter (300) according to claim 1, wherein
the adapter (300) is shaped elongated, preferably tubular shaped, along an axis (316) of the adapter (300); and/or
the seal of the adapter (300) comprises at least one adapter channel seal (304), preferably two adapter channel seals (304), and/or an adapter seal (306)
the adapter channel seal (304) is adapted to provide a gas-tight seal against the environment and/or to provide a first fluid connection (310) between the adapter (300) and the gas source (100) in a gas tight-manner
the adapter channel seal (304) is adapted to allow the inlet valve (200) to move, particularly axially, without lateral slack, inside the adapter channel (302).

3. The adapter (300) according to claims 1 or 2, wherein
the adapter channel seal (304) is adapted to provide a gas-tight seal against the environment and/or to provide a first fluid connection (310) between the adapter (300) and the gas source (100) in a gas-tight manner; and/or
the adapter seal (306) is adapted to provide a gas-tight seal against the environment and/or to provide a second fluid connection (312) between the adapter (300) and the gas-insulated switchgear (500) in a gas-tight manner.

4. Gas supply system (10) for a gas-insulated switchgear (500), comprising: a gas source (100), an adapter (300), an inlet valve (200) connected to the gas source (100) and connectable to the adapter (300), and an outlet valve (400) connectable to the gas-insulated switchgear (500) and the adapter (300), wherein
the inlet valve (200) is adapted to open and/or close a first fluid connection (310) between the adapter (300) and the gas source (100),
the outlet valve (400) is adapted to open and/or close a second fluid connection (312) between the adapter (300) and the gas-insulated switchgear (500), and
the adapter (300) is configured to receive the inlet valve (200) and the outlet valve (400) so as to establish the first and second fluid connections (310, 312),
wherein
in a state where the inlet valve (200) is inserted into the adapter (300) to a penetration depth less than a first penetration depth (L1), the inlet valve (200) and the outlet valve (400) are adapted to close the first and second fluid connections (310, 312),
in a state where the inlet valve (200) is inserted into the adapter (300) to a penetration depth greater than a second penetration depth (L2), which is greater than the first penetration depth (L1), the inlet valve (200) and the outlet valve (400) are adapted to open the first and second fluid connections (310, 312), and
the first and second fluid connections (310, 312) are gas-tight with respect to the environment.

5. The gas supply system (10) according to claim 4, wherein
in a state of the inlet valve (200) inserted in the adapter (300) with a penetration depth greater than the first penetration depth (L1) and equal to or less than the second penetration depth (L2), the outlet valve (400) is adapted to close the second fluid connection (312), and the inlet valve (200) is adapted to open the first fluid connection (310); and/or
in a state of the inlet valve (200) not inserted in the adapter (300), the outlet valve (400) and the inlet valve (200) are each closed, allowing the gas-insulated switchgear (500) and the gas source (100) to be each sealed off from the environment.

6. The gas supply system (10) according to claim 4 or 5, wherein
the inlet valve (200) is adapted to open and/or to close the first fluid connection (310) as a function of the penetration depth of the inlet valve (200) in the adapter (300); and/or
the inlet valve (200) is adapted to i) open the first fluid connection (310), in a state of the inlet valve (200) inserted in the adapter (300) with a penetration depth greater than the first penetration depth (L1), and/or ii) close the first fluid connection (310), in a state of the inlet valve (200) inserted in the adapter (300) with a penetration depth less than the first penetration depth (L1) or in a in a state of the inlet valve (200) not inserted in the adapter (300); and/or
the inlet valve (200) comprises an axially extending inlet channel (202) radially bounded by an inlet wall (204), and/or an elastic element such as an inlet spring (206), and/or an inlet pin (208), and/or a first spring locker (214) fixed to the inlet wall (204) and/or a second spring locker (216) fixed to the inlet pin (208).

7. The gas supply system (10) according to any of claims 4 to 6, wherein
the elastic element of the inlet valve (200) i) abuts at an upstream end against the first spring locker (214), and/or ii) abuts at a downstream end against the second spring locker (216), and/or iii) is preloaded so as to elastically retain the inlet pin (208) in an initial position in which a downstream end of the pin extends beyond a downstream end of the inlet channel (202) by a length greater than zero; and/or
the inlet pin (208) has an inlet disk (210) at an upstream end.

8. The gas supply system (10) according to any of claims 4 to 7, wherein
upon insertion of the inlet valve (200) in the adapter (300) with a penetration depth greater than the first penetration depth (L1), the inlet valve (200) is adapted to allow the inlet pin (208) and the inlet disk (210) to be displaced relative to the inlet channel (202) in the upstream direction (320) to allow gas to enter the inlet channel (202) around the inlet disk (210); and/or
the inlet valve (200) is adapted i) to keep the inlet channel (202) closed in the initial position of the inlet pin (208) when the inlet disk (210) abuts against an upstream end of the inlet channel (202) and thus preferably to close the inlet channel (202) and the fluid connection through the inlet channel (202) and/or the inlet valve (200), and/or ii) to open the inlet channel (202) when the inlet pin (208) is moved from the initial position of the inlet pin (208) such that the inlet disk (210) no longer abuts against the upstream end of the inlet channel (202) and thus preferably to open the inlet channel (202) and the fluid connection through the inlet channel (202) and/or the inlet valve (200); and/or
the adapter seal (306) is formed in a plane that is substantially lateral to the axial direction (316) and/or spaced from a downstream adapter end by a length of at least the second penetration depth (L2) minus the first penetration depth (L1).

9. The gas supply system (10) according to any of claims 4 to 8, wherein
the outlet valve (400) is adapted to open and/or to close the second fluid connection (312) as a function of the penetration depth of the inlet valve (200) in the adapter (300); and/or
the outlet valve (400) is adapted i) to open the second fluid connection (312) in a state of the inlet valve (200) inserted in the adapter (300) with a penetration depth greater than the second penetration depth (L2), and/or ii) otherwise to close the second fluid connection (312); and/or
the outlet valve (400) is adapted to provide a gas-tight seal of the adapter (300) and/or the gas-insulated switchgear (500) against the environment, in particular by the outlet valve (400) abutting against the adapter seal (306); and/or
the outlet valve (400) comprises an outlet disk (402), and/or an outlet spring (404), and/or an outlet seal (406).

10. The gas supply system (10) according to any of claims 4 to 9, wherein
the outlet seal (406) is substantially formed as an O-ring, and preferably surround an inner wall of the outlet valve (400); and/or
the outlet seal (406) is adapted to provide the fluid connection between the adapter (300) and the outlet valve (400) in a gas tight-manner and/or to provide a gas-tight seal against the environment; and/or
the outlet spring (404) is i) fixed at a downstream end to the inner wall of the outlet valve (400) and/or ii) fixed at an upstream end to the outlet disk (402), and/or iii) preloaded, especially partially compressed, so as to elastically retain the outlet disk (402) in an initial position in which the outlet disk (402) abuts against the outlet seal (406), thus preferably providing a gas seal against the adapter (300); and/or
in a state of the inlet valve (200) inserted in the adapter (300) with a penetration depth greater than the second penetration depth (L2), the outlet disk (402) is adapted to be moved downstream by a downstream end of the inlet valve (200) and to further compress the outlet spring (404), preferably to open the outlet valve (400) and in particular to allow gas to flow from the adapter (300) into the gas-insulated switchgear (500).

11. Gas-insulated switchgear (500), comprising a gas supply system (10) according to any of claims 4 to 10.

12. Method of supplying a gas to the interior of a gas-insulated switchgear (500), the method comprising:
providing (S10) the gas-insulated switchgear (500) comprising a gas source (100), an adapter (300), an inlet valve (200) connected to the gas source (100) and connectable to the adapter (300), and an outlet valve (400) connected to the gas-insulated switchgear and the adapter (300);
inserting (S20) the inlet valve (200) into the adapter (300) to a penetration depth less than a first penetration depth (L1), thereby ensuring that the outlet valve (400) and the inlet valve (200) are closed so that a first fluid connection (310) between the adapter (300) and the gas source (100) and a second fluid connection (312) between the adapter (300) and the gas-insulated switchgear (500) are closed;
guiding (S30) the inlet valve (200) into the adapter (300) to a penetration depth greater than a second penetration depth (L2) which is greater than the first penetration depth (L1), thereby opening the outlet valve (400) and the inlet valve (200) to enable opening the first fluid connection (310) and the second fluid connections (310, 312) so as to enable gas to be supplied from the gas source (100) to the gas-insulated switchgear (500); and
ensuring (S40) that the first and second fluid connections (310, 312) are gas-tight to the environment.

13. Method according to claim 12, further comprising:
inserting the inlet valve (200) into the adapter (300) at a penetration depth greater than the first penetration depth (L1) and equal to or less than the second penetration depth (L2), causes the outlet valve (400) to remain closed, thereby keeping the second fluid connection (312) closed, and/or the inlet valve (200) to open, thereby opening the first fluid connection (310); and/or
not inserting the inlet valve (200) into the adapter (300) causes both the outlet valve (400) and the inlet valve (200) to remain closed, thus sealing off the gas-insulated switchgear (500) and the gas source (100) from the environment.

14. Method according to any of claims 12 or 13, further comprising:
withdrawing the inlet valve (200) from the adapter (300) from a penetration depth greater than the second penetration depth (L2) to a penetration depth equal to or less than the second penetration depth (L2) and greater than the first penetration depth (L1) causes i) the outlet valve (400) to close, thereby closing the second fluid connection (312), and ii) the inlet valve (200) to remain open, thereby keeping the first fluid connection (310) open; and/or
withdrawing the inlet valve (200) from the adapter (300) from a penetration depth equal to or less than the second penetration depth (L2) and greater than the first penetration depth (L 1) to a penetration depth less than the first penetration depth (L1), or removing the inlet valve (200) from the adapter (300), causes i) the outlet valve (400) to remain closed, thereby keeping the second fluid connection (312) closed, and ii) the inlet valve (200) to close, thereby closing the first fluid connection (310).

15. Method according to any of claims 12 to 14, further comprising:
controlling a gas flow from the gas source (100) to the interior of the gas-insulated switchgear is performed as a function of a pressure difference between gas source (100) and gas-insulated switchgear (500), preferably wherein specifying the quantity of gas to be filled into the gas-insulated switchgear is done by specifying an initial pressure difference, especially wherein the gas flow is allowed if the pressure difference is greater than zero, otherwise it is stopped.
